# FASCICULE DE BREVET EUROPEEN

(11) **EP 4 281 360 B1**
(45) Date de publication et mention de la délivrance du brevet: **11.03.2026**
(21) Numéro de dépôt: 22700647.5
(22) Date de dépôt: 14.01.2022
(51) Int. Cl.: B64C 1/14

(54) **PROCÉDÉ ET ENSEMBLE DE GUIDAGE STABILISATEUR DE PORTE DE VÉHICULE À VERROUILLAGE DE BIELLE**
VERFAHREN UND ANORDNUNG DER STABILISATORFÜHRUNG FÜR FAHRZEUGTÜREN MIT PLEUELSTANGENSCHLOSS
METHOD AND ASSEMBLY OF VEHICLE DOOR STABILIZER GUIDE WITH CONNECTING ROD LOCK

(30) Priorité: 21.01.2021 FR 2100591
(43) Date de publication de la demande: 29.11.2023
(73) Titulaire: Latecoere, 31500 Toulouse (FR)
(72) Inventeur: GILDAS, Martin, 31240 L'UNION (FR)
(74) Mandataire: Junca, Eric
(86) Numéro de dépôt international: PCT/EP2022/050783
(87) Numéro de publication internationale: WO 2022/157083

(56) Documents cités:
- FR-A1- 3 071 222
- FR-A1- 3 087 189
- FR-A1- 3 087 415

## Description

### DOMAINE TECHNIQUE

L'invention se rapporte à un procédé de guidage stabilisateur de porte lors de son ouverture/fermeture ainsi qu'à un système comprenant une porte d'aéronef de type semi-plug, un encadrement de porte, un mécanisme d'ouverture/fermeture et un ensemble de guidage stabilisateur de mise en œuvre, pour des véhicules de transport de personnes et/ou de marchandises. Plus particulièrement, la présente invention se rapporte aux portes de type semi-plug, c'est-à-dire aptes à traverser leur encadrement lors de leur ouverture et de leur fermeture. Notamment les aéronefs, les autocars ou les cabines de poids lourd sont destinés à être équipés de telles portes.

Dans le domaine aéronautique, des butées installées sur les pourtours de la porte et de son encadrement, permettent d'engager la porte en la maintenant dans son encadrement, ces butées étant d'autant plus sollicitées pendant les phases de vol de l'aéronef par la pressurisation exercée dans la cabine. A l'inverse, à l'arrêt de l'aéronef au sol, les butées sont désengagées afin d'autoriser l'ouverture des portes. Les portes et leur système d'ouverture/fermeture sont conçus pour être simples et rapides à manipuler, tout en évitant d'endommager la structure de l'aéronef - en particulier son fuselage - à laquelle ils sont attachés.

### ÉTAT DE LA TECHNIQUE

Un type classique de cinématique d'ouverture consiste à maintenir la porte constamment parallèle au fuselage afin d'éviter qu'elle ne vienne heurter ce dernier en cas d'ouverture d'urgence ou de conditions météorologiques désavantageuses. L'étape de désengagement des butées s'effectue donc en conservant la porte parallèle au fuselage : pour ce faire, la porte est d'abord levée ou abaissée pour désengager les butées, avant de lui appliquer pour la sortir de son encadrement un mouvement de translation circulaire, c'est-à-dire que la porte reste parallèle à elle-même lors de son déplacement tout en décrivant une trajectoire circulaire.

Un inconvénient majeur lié à ce système est de faire porter au personnel navigant tout le poids de la porte lors de la phase de désengagement des butées. Des améliorations pour faciliter cette tâche ajoutent des mécanismes de compensation de masse et des bras d'articulation supplémentaires, mais ces moyens ont pour conséquence d'alourdir sensiblement la masse globale de la porte.

Un autre système d'ouverture tel que décrit dans le brevet US2751636A permet de générer une cinématique d'ouverture/fermeture de porte non parallèle au fuselage. Cette cinématique consiste à effectuer un premier pivotement de la porte autour d'un axe passant par sa médiane verticale pour désengager les butées, puis un second mouvement de translation circulaire, dit de « swivelling », de la porte autour d'un axe coïncidant avec un bord vertical de l'encadrement. Un tel système, qui permet de s'affranchir du mécanisme de masse et facilite la manipulation de la porte, reste d'une grande complexité à mettre en œuvre car il fait intervenir une combinaison de bielles, de renvois et de pignons en grand nombre, ainsi qu'un levier de déblocage situé à proximité de la porte, sur son encadrement.

Par ailleurs, le premier pivotement de désengagement des butées peut être remplacé par un autre mécanisme, tel que décrit dans le brevet FR3087189, et qui présente l'avantage d'être actionné à mi-hauteur de la porte directement par l'intermédiaire du bras de porte. Cependant, cette solution reste également complexe à mettre en œuvre.

D'une façon générale, quelle que soit la cinématique, la phase de swivelling présente des risques d'instabilité qui entraînent des difficultés à manipuler la porte, des durées d'ouverture / fermeture prolongées, ainsi que des dommages résultant de chocs de la porte sur le fuselage de l'aéronef.

Il est connu que ce problème d'instabilité de porte lors de la phase de swivelling a été abordé en utilisant deux bielles de guidage mobiles en rotation et placées en partie haute de la porte. Ce mode de réalisation implique que la porte reste en permanence parallèle au fuselage, notamment lors de la phase de désengagement des butées, ce que l'invention cherche à éviter afin de ne pas avoir à soulever/abaisser la porte ou d'augmenter la masse globale. De plus il est nécessaire d'utiliser au moins deux bielles de guidage dans la partie haute de la porte car si une seule bielle est utilisée, lors de la rotation du bras de porte entre environ 110° et 135°, la corde du bras de porte et de la bielle sont confondues et la cinématique devient instable.

### EXPOSE DE L'INVENTION

L'invention a pour objectif principal de résoudre le problème de stabilité lors de la phase de swivelling dans le contexte d'une cinématique de sortie ou d'entrée de la porte non parallèle au fuselage, présentant l'avantage de se libérer de la contrainte de levage / descente vertical, et donc de proposer une porte facile à manipuler et présentant un gain de masse.

Pour stabiliser la porte, l'invention prévoit d'utiliser une bielle de guidage, dite bielle de stabilisation, cette bielle étant libre en translation sur la porte pendant la phase de désengagement des butées et se verrouillant lorsque s'initie la phase de swivelling, afin de guider et maintenir la porte parallèle au fuselage par cette bielle de guidage alors verrouillée, apportant ainsi à la porte la stabilisation recherchée.

Plus précisément, la présente invention a pour objet un procédé de guidage stabilisateur de porte d'aéronef de type semi-plug lors de son ouverture/fermeture selon la revendication 1.

Avantageusement, outre la stabilisation de la porte pendant son ouverture, la bielle de stabilisation ne restreint pas l'espace de zone libre de passage en position de porte totalement dégagée de son encadrement car elle ne dépasse pas du volume du bras. De même en position de porte fermée, la bielle de stabilisation et son environnement de verrouillage ne dépassent pas vers l'intérieur de la cabine.

Dans certaines formes de mise en œuvre privilégiées :
- un moyen de rappel déclenche le verrouillage/déverrouillage de la bielle de stabilisation entre deux positions de fonctionnement correspondant respectivement au verrouillage et au déverrouillage de la bielle de stabilisation ;
- en position de verrouillage, la bielle de stabilisation est bloquée en translation le long de la porte et, en position de déverrouillage, la bielle de stabilisation est libérée en translation le long de la porte ;
- lors des phases de désengagement et de réengagement des butées, le moyen de rappel est actionné par des paliers de verrouillage/déverrouillage de la bielle de stabilisation, ces paliers correspondant aux deux positions de fonctionnement du moyen de rappel;
- lors des phases de swivelling et swivelling-retour, le moyen de rappel n'est pas actionné par les paliers de verrouillage/déverrouillage.

L'invention se rapporte également à un système comprenant une porte d'aéronef de type semi-plug, un encadrement de porte, un mécanisme d'ouverture/fermeture et un ensemble de guidage stabilisateur de porte selon la revendication 6.

Selon certains modes de réalisation préférés :
- le mécanisme de verrouillage de la bielle de stabilisation est localisé sur une zone médiane de bordure du haut de la porte ;
- le mécanisme de verrouillage/déverrouillage de la bielle de stabilisation est composé d'au moins deux dispositifs, un premier dispositif solidaire de la porte et un deuxième solidaire de l'encadrement de porte, le premier dispositif comportant un levier articulé sur un axe et un support de levier muni d'une glissière dans laquelle l'extrémité mobile de la bielle de stabilisation peut se déplacer en translation horizontale par rapport à la porte, et le deuxième comportant la rampe de commande ainsi qu'une rampe de suivi du premier dispositif pendant les phases de désengagement/réengagement des butées de la porte, ces deux rampes étant accolées l'une à l'autre et positionnées dans un plan horizontal ;

- le levier présente une ouverture à une de ses extrémités qui, en position de verrouillage, est engagée sur la bielle de stabilisation afin de bloquer sa translation le long de la porte et qui, en position de déverrouillage, est apte à libérer la bielle de stabilisation en translation le long de la porte et, à son autre extrémité un doigt qui maintient, lors des phases de désengagement et de réengagement des butées, le contact de la bielle de stabilisation sur la rampe de commande ;
- le moyen de rappel du levier est un ressort de torsion enroulé autour de l'axe du levier agencé de sorte qu'il positionne le levier en position de verrouillage lorsqu'il est relâché ;
- la rampe de commande est disposée et dimensionnée de sorte que, à la fin de la phase de désengagement des butées, le levier passe en position de verrouillage de la bielle de stabilisation et que, au début de la phase de réengagement des butées, le levier passe en position de déverrouillage de la bielle de stabilisation;
- les paliers de la rampe de commande sont constitués d'un premier et d'un deuxième paliers horizontaux et parallèles, agencés pour que, lorsque la porte est en position fermée, le premier palier fait contact avec le doigt du levier, le ressort de torsion maintenant ce doigt en contact plaçant ainsi le levier en position de déverrouillage de la bielle de stabilisation et, lorsque la porte arrive en fin de phase de désengagement des butées ou au début de phase de réengagement des, le second palier fait contact avec le doigt de levier plaçant le levier en position de verrouillage de la bielle de stabilisation ;
- les deux paliers de la rampe de commande sont reliés entre eux par une surface définissant une pente de transition.

On entend par phase de désengagement des butées, l'ensemble des étapes qui commence par la séparation des butées d'encadrement et de porte, jusqu'à la sortie de la porte de son encadrement et s'achève lorsque la porte est de nouveau parallèle au fuselage. De façon similaire, la phase de réengagement des butées débute à la fin de la phase de swivelling-retour, lorsque la porte n'est plus parallèle au fuselage et s'apprête à rentrer dans son encadrement de porte, pour s'achever lorsque les butées d'encadrement et de porte sont en contact de part et d'autre à l'avant et à l'arrière de l'encadrement.

Dans le présent texte, le qualificatif « horizontal » d'une étendue plane signifie que cette étendue est parallèle au sol sur lequel repose le véhicule, en particulier un aéronef en taxiage ou en position fixe. Le qualificatif « au-dessus » d'une étendue plane par rapport à une autre signifie que cette étendue est située à une hauteur supérieure à l'autre par rapport audit sol.

### PRESENTATION DES FIGURES

D'autres caractéristiques et avantages de la présente invention ressortiront à la lecture qui suit d'un exemple de réalisation détaillé sans en limiter la portée, en référence aux figures annexées qui représentent, respectivement :
- la figure 1 est une vue en perspective d'un avion avec son système d'axes conventionnel ;
- la figure 2 une vue de face d'une porte d'avion dans son encastrement en position fermée ;
- la figure 3 est une vue de face d'une porte d'avion en position ouverte ;
- la figure 4a, la figure 4b, la figure 4c, la figure 4d, la figure 4e, la figure 4f et la figure 4g sont des vues en perspective de la cinématique de désengagement des butées de porte au niveau de la bielle de stabilisation localisée dans la partie haute de la porte ;
- la figure 5a et la figure 5b sont des vues en perspective de la rampe de commande en action sur le levier de verrouillage ;
- la figure 6a est une vue en perspective du levier de verrouillage en position déverrouillée ;
- la figure 6b est une vue en perspective du levier de verrouillage en position verrouillée ;
- la figure 7a, la figure 7b, et la figure 7c sont des vues en perspective de positions successives de la porte par la bielle de stabilisation pendant la phase de swivelling.

### DESCRIPTION DETAILLEE

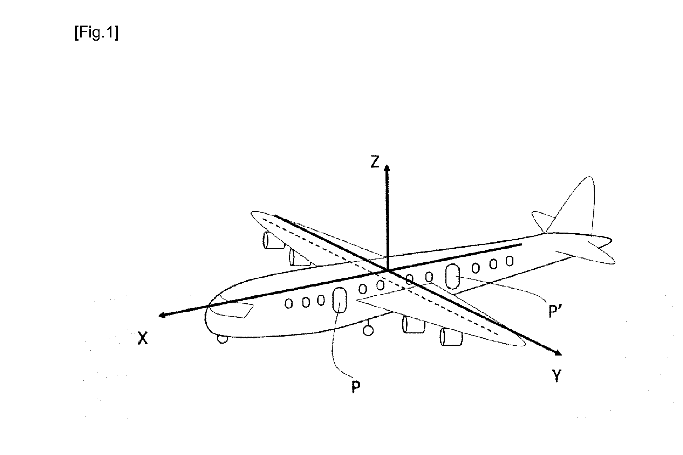

En référence à la vue globale de la figure 1, un avion 1 ainsi que son repère direct d'axes conventionnel (X, Y Z) sont représentés afin de définir les différentes directions utilisées : l'axe X selon la direction longitudinale de l'avion 1, l'axe Y perpendiculaire à l'axe X et définissant un plan XY parallèle au sol sur lequel l'avion repose, et l'axe Z complétant le repère direct. Le fuselage 10 de cet avion 1 présente en particulier deux ouvertures P, P' de porte passagers sur une même face de fuselage 10a.

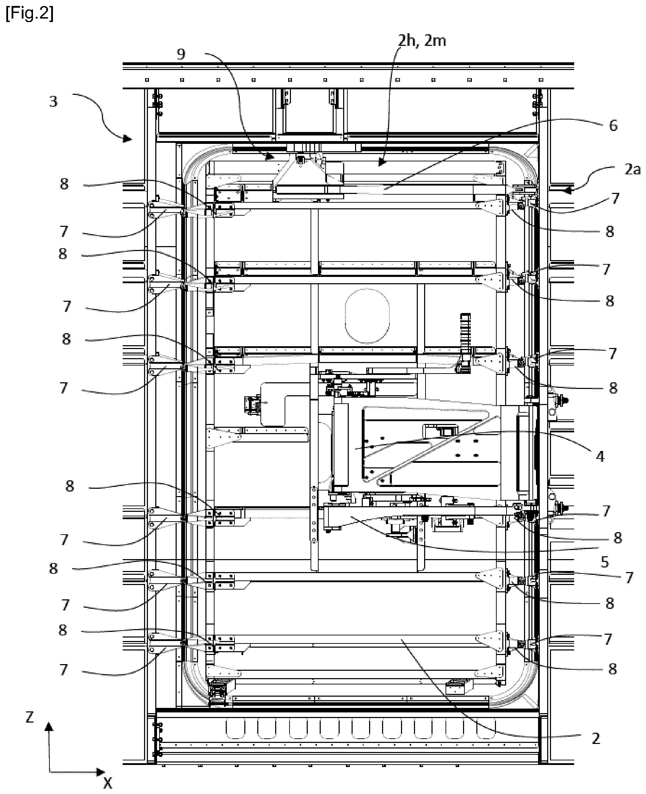

La figure 2 montre plus précisément une porte 2 de type semi-plug dans son encadrement 3 dans une configuration de fermeture. La porte 2 est articulée par rapport à son encadrement 3 par l'intermédiaire d'un bras de porte 4 et de deux bielles (5, 6), une bielle 5 qui participe au pilotage de la porte en combinaison et au voisinage du bras 4, et une bielle de stabilisation 6 disposée en bordure haute 2h de la porte 2, dans cet exemple de réalisation. Cette bielle de stabilisation 6 est mobile :
- en rotation par rapport à l'encadrement 3, et,
- en rotation et en translation longitudinalement entre l'avant et l'arrière de la porte, définis par rapport à l'axe longitudinal (X) de l'avion 1, l'avant de la porte étant le bord de porte vertical 2a situé du côté de l'avant.

Dans cette configuration de fermeture, les butées de l'encadrement 7 et les butées de la porte 8 sont engagées en douze points de contact, dont six sont positionnées à l'avant et six à l'arrière.

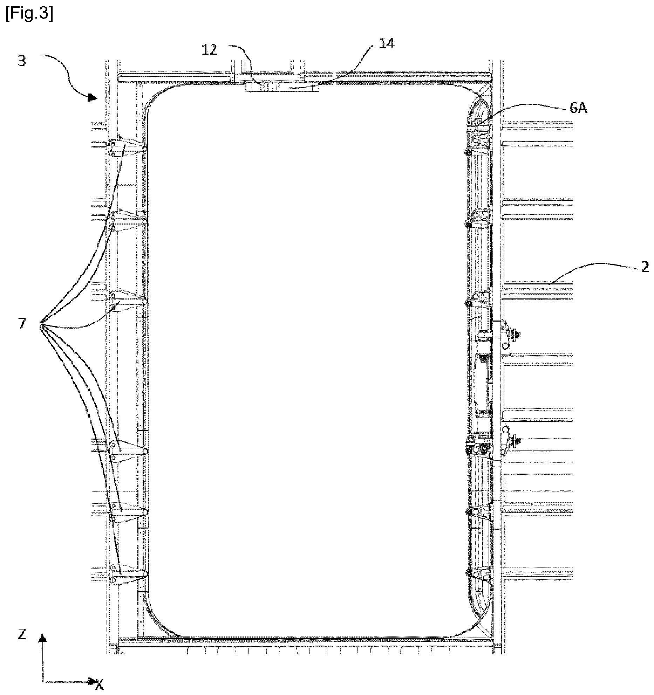

La figure 3 illustre la porte 2 dans sa configuration ouverte et les éléments qui sont solidaires de l'encadrement de porte 3, à savoir : les butées d'encadrement 7, l'attache 6A de la bielle de guidage supérieure 6 sur l'encadrement 3, ainsi que la rampe de guidage 12 et la rampe de commande 14 du système de verrouillage/déverrouillage 9 de la bielle de guidage 6.

Le mécanisme de verrouillage de la bielle de guidage supérieure 9 est installé dans la zone médiane 2m du haut de la porte.

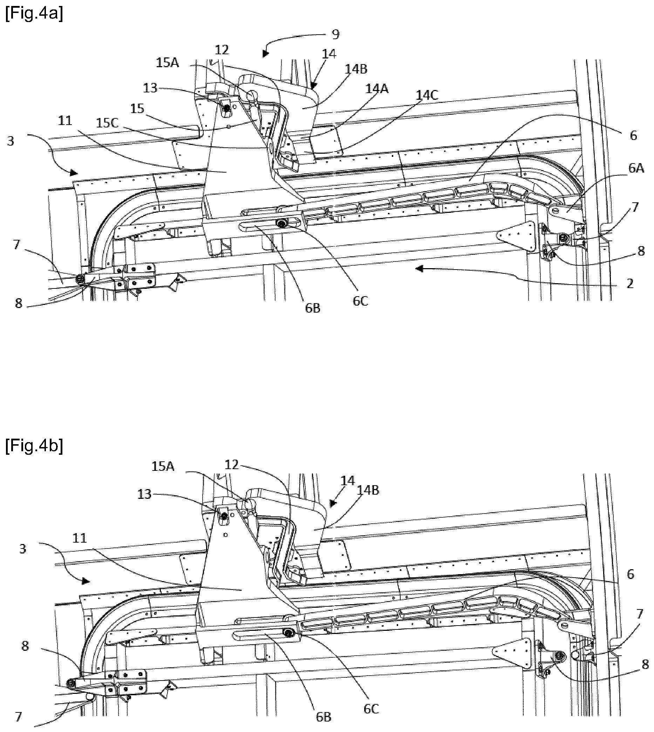

Les figures 4a à 4g présentent une vue du dessous du mécanisme de verrouillage/déverrouillage 9 de la bielle de guidage de stabilisation 6 pendant la cinématique de désengagement des butées d'encadrement 7 et des butées de porte 8, selon les différentes phases qui suivent.

La figure 4a montre d'abord la position de la bielle de guidage supérieure 6, ainsi que celle de son axe mobile 6C en translation dans son coulisseau 6B par rapport à la porte 2, lorsque celle-ci est en position de fermeture. Les butées d'encadrement 7 et les butées de porte 8 sont engagées de chaque côté de la porte 2. Le mécanisme de verrouillage/déverrouillage 9 comporte deux dispositifs, le premier composé d'un levier 15 et d'un support de levier 11 et le second composé d'une rampe d'accompagnement 12 et d'une rampe de commande 14.

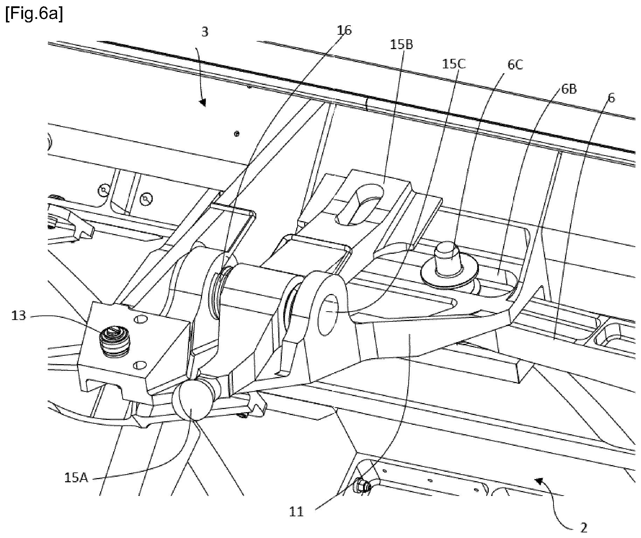

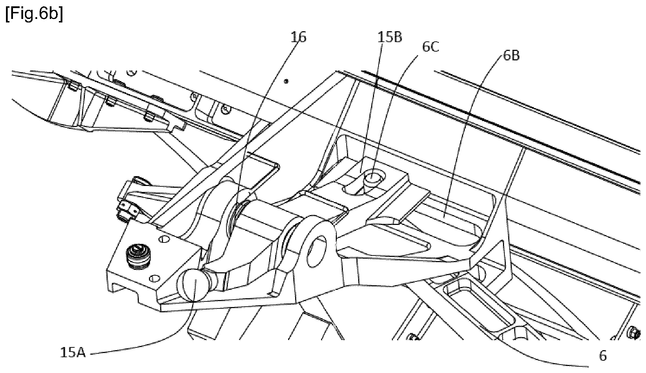

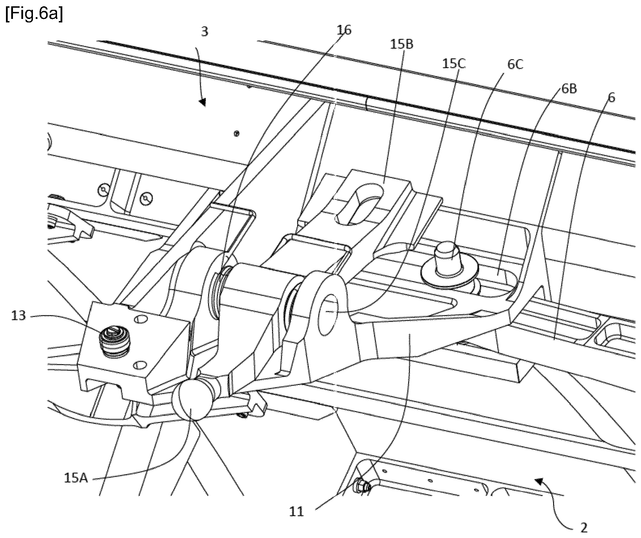

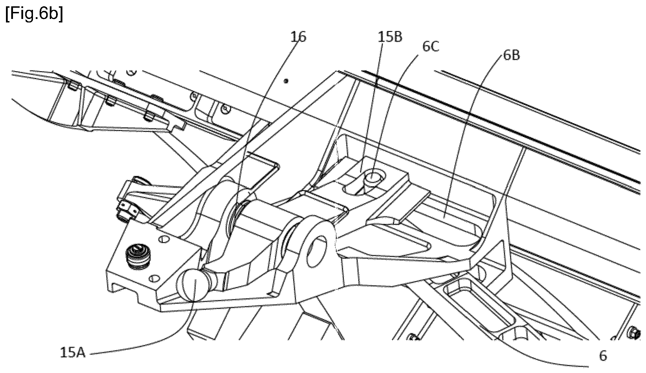

La rampe d'accompagnement 12 et la rampe de commande 14 sont accolées l'une à l'autre et solidaires de l'encadrement de porte 3. Le support de levier 11 est fixé en bordure haute 2h de la porte 2. Ce support 11 est composé d'une plaque de forme triangulaire présentant à sa base un coulisseau 6B permettant le déplacement en translation de la bielle de guidage de stabilisation 6, et d'un axe horizontal 15C autour duquel est enroulé un ressort de torsion 16 (cf. figures 6a ou 6b).

Le levier 15 est solidaire du ressort de torsion 16 de sorte que ce levier 15 pivote en rappel autour de ce ressort 16 et de l'axe horizontal 15C du support de levier 11, définissant deux positions de fonctionnement : une position de verrouillage et une position de déverrouillage de la bielle de stabilisation 6. De plus, le levier 15 présente à une de ses extrémités un doigt 15A faisant contact avec la rampe de commande 14 et, à son autre extrémité, une ouverture 15B (cf. figures 6a ou 6b) qui, lorsqu'elle s'engage dans l'axe mobile 6C en translation de la bielle de guidage de stabilisation 6, provoque le blocage de ladite translation.

Quant à la rampe de commande 14, elle a pour fonction d'activer ou de désactiver le verrouillage de la bielle de guidage de stabilisation 6 mobile en bloquant la translation de ladite bielle. A cette fin, la rampe de commande 14 présente deux paliers horizontaux (14B, 14C) et parallèles entre eux, reliés par une pente de transition 14A. Un premier palier 14B est positionné à une hauteur telle que lorsque le doigt du levier 15A y est au contact, le ressort de torsion 16 maintenant le contact plaçant le levier 15 en position de déverrouillage. La bielle de stabilisation 6 est alors déverrouillée et libre de se déplacer en translation.

Le doigt du levier 15A se déplace sur ce premier palier 14B pendant le début de la phase de désengagement des butées (7, 8) jusqu'à atteindre la pente de transition 14A : cette phase de désengagement des butées (7, 8) se réalisant dans un plan horizontal, le ressort de torsion 16 maintient constamment le contact entre le doigt du levier 15A et la pente de transition 14A jusqu'à atteindre le second palier 14C, positionné à une hauteur supérieure au premier palier. Dans ces conditions, lorsque le doigt de levier 15A arrive à son contact, le ressort de torsion 16 maintient alors l'autre extrémité 15B du levier en position de verrouillage de l'axe mobile 6C de la bielle de stabilisation 6.

En effet, lorsque le doigt du levier 15A sous l'action du ressort de torsion 16 glisse sur la pente de transition 14A pour passer d'un palier à l'autre, le levier 15 bascule autour de son axe 15C. A l'extrémité du second palier 14C, le doigt du levier 15A perd alors le contact et, le ressort de torsion 16 maintient verrouillée l'axe mobile 6C de la bielle de stabilisation 6 pendant le reste de l'ouverture de la porte.

Pendant la phase retour de réengagement des butées (7, 8), le processus inverse est observé : initialement le doigt du levier 15A est libre et l'axe mobile 6C de la bielle de stabilisation 6 est verrouillée, puis le doigt du levier 15A vient au contact avec le second palier 14C jusqu'à atteindre la pente de transition 14A. Le contact étant maintenu sur cette pente, le levier 15 va pivoter autour de son axe 15C et libérer l'axe mobile 6C de la bielle de stabilisation 6 lorsque le doigt du levier 15A atteint le premier palier 14B : la bielle de stabilisation 6 étant de nouveau mobile, la cinématique de fermeture de porte peut être réalisée.

La figure 4b montre le début de la phase d'ouverture de la porte 2 avec en particulier la désolidarisation des butées de porte 8 et des butées d'encadrement 7. La rampe de guidage 12 permet au support de levier 11 de suivre la cinématique de désengagement/réengagement des butées par l'intermédiaire de sa tige de guidage 13.

Dans la cinématique, la porte 2 a réalisé un mouvement de translation vers l'arrière et vers l'intérieur de la cabine selon l'initiation de la première étape du procédé. La rampe d'accompagnement 12 est particulièrement adaptée à ce début de cinématique afin de ne pas bloquer le mouvement de la porte 2. En conséquence, la bielle de stabilisation 6 est soumise à une translation vers l'avant de la porte 2 dans son coulisseau 6B.

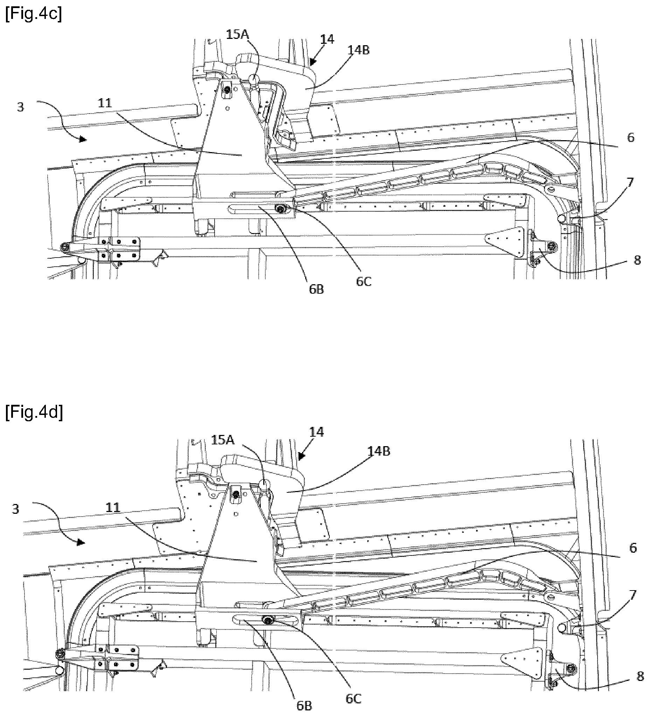

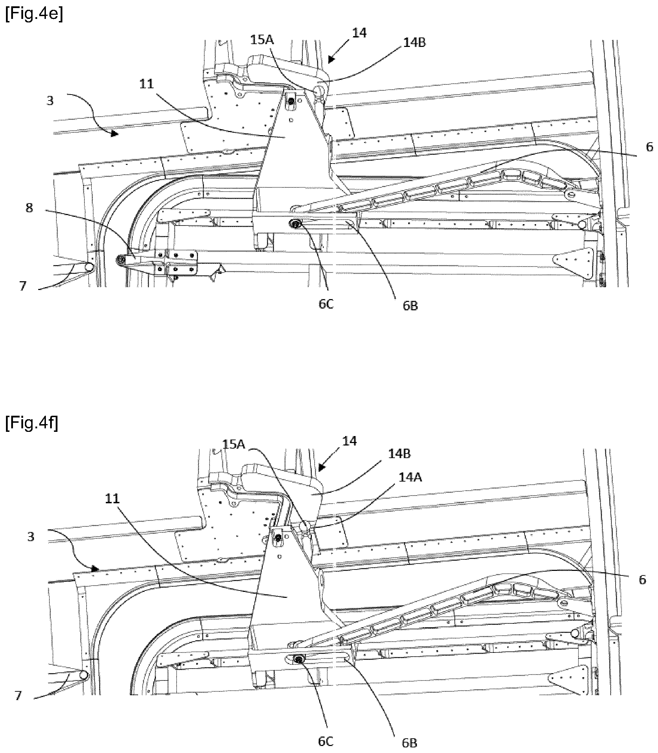

Les figures 4c, 4d et 4e détaillent le dégagement de la porte 2 jusqu'à sa sortie complète parallèlement à l'encadrement 3 à l'extérieur du fuselage réalisé par un mouvement de rotation de la porte autour de sa partie arrière puis une translation inclinée vers l'avant et l'extérieur. Pendant cette première étape du procédé, le doigt du levier 15A garde le contact avec le premier palier 14B de la rampe de commande 14 : le système de verrouillage est maintenu désactivé et la bielle de stabilisation 6 conserve sa mobilité en translation pendant ces étapes et parcourt l'ensemble du coulisseau 6B.

La figure 4f illustre le doigt du levier 15A à l'entrée de la pente de transition 14A de la rampe de commande 14 : le ressort de torsion 16 étant configuré de sorte que le doigt du levier 15A soit en permanence en contact avec la rampe de commande 14 tant que celle-ci est accessible, le changement de pente entrainant l'activation du mécanisme de verrouillage de l'axe mobile 6C de la bielle de stabilisation 6.

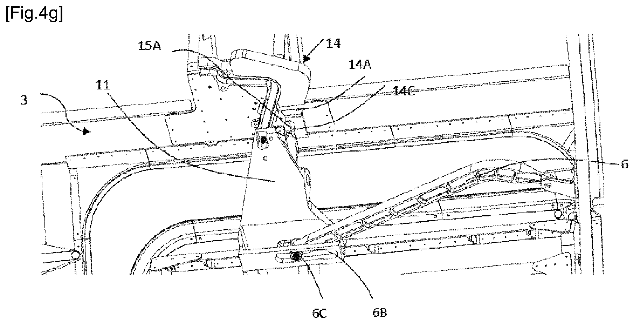

Dans la figure 4g, le doigt du levier 15A est sur le second palier 14C de la rampe de commande 14 et la bielle de stabilisation 6 est bloquée en translation par rapport à la porte 2 par le verrouillage de l'axe mobile 6C selon la deuxième étape du procédé.

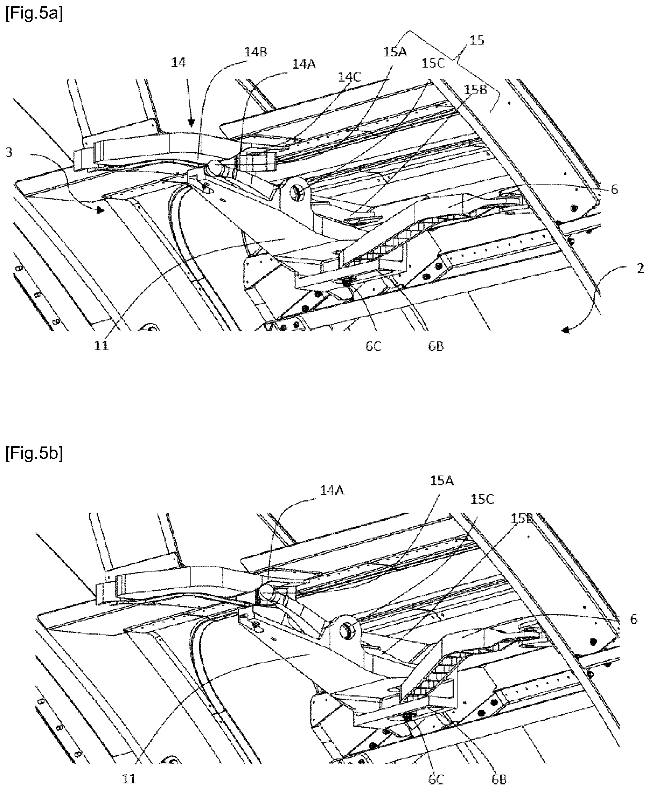

Les figures 5a et 5b représentent une vue en perspective du mécanisme de verrouillage 9, et plus particulièrement le levier 15 lors de l'activation du verrouillage de l'axe mobile 6C de la bielle de stabilisation 6. Dans la figure 5a, le doigt du levier 15A est encore sur le premier palier 14B et l'autre extrémité 15B du levier 15 est surélevée et la bielle de stabilisation 6 est mobile en translation conformément à la première étape du procédé. Dans la figure 5b, le doigt du levier 15A, sous l'action du ressort de torsion 16, garde le contact avec la rampe de commande 14. La pente de transition 14A de la rampe de commande 14 provoque alors un changement de position du levier 15 qui bascule sur son axe 15C et s'engage sur l'axe mobile 6C de la bielle de stabilisation 6 afin d'en verrouiller la translation conformément à la deuxième étape du procédé.

Les figures 6a et 6b illustrent des vues du dessus du levier 15 en positions de verrouillage et déverrouillage :
- en figure 6a, l'axe mobile 6C de la bielle de stabilisation 6 est libre et celle-ci peut se déplacer en translation dans son coulisseau 6B par rapport à la porte 2 conformément à la première étape du procédé ; et
- en figure 6b, le levier 15 est venu engager - par son autre extrémité 15B - l'axe mobile 6C de la bielle de stabilisation 6, la rendant ainsi immobile et verrouillant les mouvements en translation de la bielle de stabilisation 6 conformément à la deuxième étape du procédé.

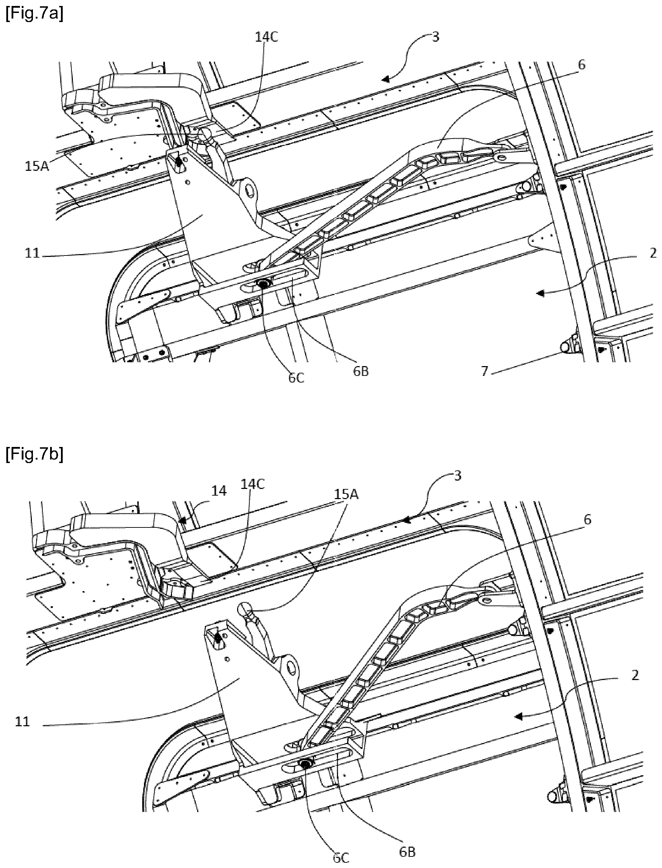

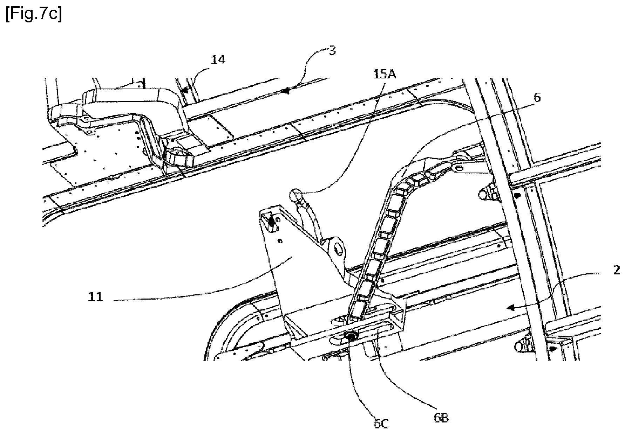

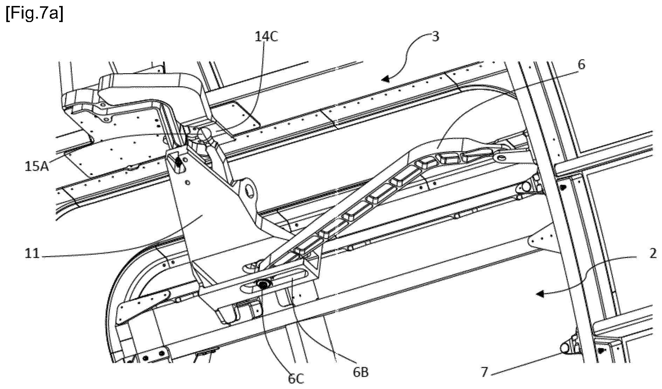

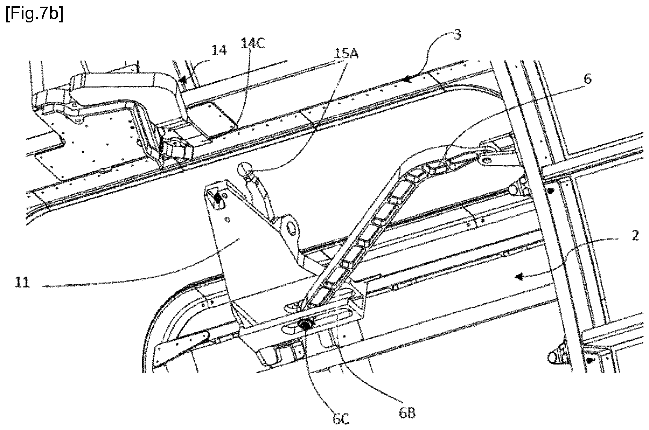

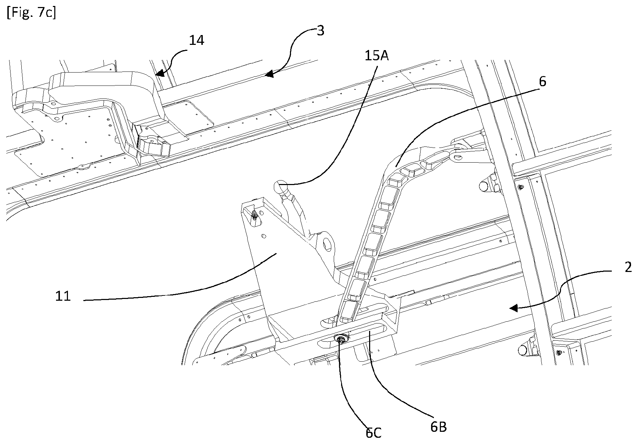

Les figures 7a, 7b et 7c montrent l'initiation de l'étape de swivelling de la porte. Dans la figure 7a, le doigt du levier 15A est en contact avec le second palier 14C de la rampe de commande 14, ce qui a entrainé le verrouillage de la bielle de stabilisation 6. Dans les figures 7b et 7c, la porte 2 s'ouvre progressivement et le levier 15 a perdu le contact avec la rampe de commande 14. La bielle de stabilisation 6 est bloquée en translation et apporte ainsi une fonction de stabilisation à la porte 2 lors de son ouverture selon la troisième étape du procédé.

Ainsi la rampe d'accompagnement 12 du mécanisme de verrouillage/déverrouillage peut être excentrée de la zone médiane de la porte et donc être dissociée de la rampe de commande. Par ailleurs, la porte peut présenter plusieurs rampes pour d'accompagner sa cinématique d'ouverture/fermeture : il est alors possible d'utiliser l'une d'elles pour constituer cette rampe d'accompagnement 12 du mécanisme de verrouillage/déverrouillage et de l'associer à la rampe de commande 14.

Par ailleurs, la bielle de stabilisation pourrait être fixe sur la porte et en translation au niveau de son attache sur l'encadrement de porte : le mécanisme de verrouillage est alors déporté sur l'encadrement de porte. Enfin, l'invention s'applique à tout véhicule dont une porte est de type semi plug et qui effectue une translation lors de son ouverture/fermeture.

## Revendications

1. Procédé de guidage stabilisateur de porte d'aéronef de type semi-plug lors de son ouverture/fermeture, ladite porte (2) étant agencée dans une ouverture d'aéronef (P, P') définissant une structure d'encadrement de porte (3), comportant des parties avant et arrière, définies par rapport à un axe longitudinal ( axe X) de l'aéronef orientée conventionnellement entre un arrière et un avant, l'aéronef définissant des espaces intérieur et extérieur, la cinématique des mouvements de désengagement de la porte (2) par rapport à son encadrement (3) et de son ouverture complète par translation circulaire, dite swivelling, se déroulant dans un même plan horizontal, le procédé comprenant les étapes suivantes, en mode d'ouverture de la porte :
- une phase de désengagement des butées (7, 8) par un premier déplacement de la porte (2) vers l'arrière et vers l'intérieur de l'aéronef selon une rotation et une translation, suivi par un deuxième déplacement de la porte (2) par rotation autour de sa partie arrière, puis une translation inclinée vers l'avant et l'extérieur de l'aéronef amenant à la sortie de la porte (2) parallèle à son encadrement (3) à l'extérieur de l'aéronef, pendant laquelle se déplace une bielle de stabilisation (6), **caractérisé en ce que** la bielle de stabilisation est localisée en bordure de porte (2h) et s'étendant parallèlement à l'axe longitudinal de l'aéronef, et dont une des extrémités (6c) est librement mobile en translation horizontale parallèlement à une section horizontale de la porte (2) ;
- un verrouillage de ladite extrémité mobile (6c) sur la porte (2), à la fin de cette phase de désengagement des butées, cette extrémité (6c) étant alors adaptée pour ne plus se mouvoir en libre translation tout en restant articulée sur la porte (2) ; et
- un guidage stabilisé de la porte (2) par ladite bielle de stabilisation (6) parallèlement à l'axe longitudinal de l'aéronef pendant la phase de swivelling ;
et en mode de fermeture selon une cinématique inverse :
- la bielle de stabilisation (6) est maintenue verrouillée stabilisant le guidage de la porte (2) pendant une phase de swivelling retour ;
- l'une des extrémités (6c) de la bielle de stabilisation (6) est débloquée et libre en translation horizontale par rapport à la porte (2) ; et
- une phase de réengagement des butées (7, 8).

2. Procédé de guidage stabilisateur de porte selon la revendication 1 dans lequel un moyen de rappel (16) déclenche le verrouillage/déverrouillage de la bielle de stabilisation (6) entre deux positions de fonctionnement correspondant respectivement au verrouillage et déverrouillage de la bielle de stabilisation (6).

3. Procédé de guidage stabilisateur de porte selon la revendication 2 dans lequel en position de verrouillage la bielle de stabilisation (6) est bloquée en translation le long de la porte (2) et en position de déverrouillage, la bielle de stabilisation (6) est libérée en translation le long de la porte (2).

4. Procédé de guidage stabilisateur de porte selon la revendication 3 dans lequel lors des phases de désengagement et de réengagement des butées (7, 8) le moyen de rappel (16) est actionné par des paliers de verrouillage/déverrouillage de la bielle de stabilisation (6), ces paliers correspondant aux deux positions de fonctionnement du moyen de rappel (16).

5. Procédé de guidage stabilisateur de porte selon la revendication 4 dans lequel lors des phases de swivelling et swivelling-retour, le moyen de rappel (16) n'est pas actionné par les paliers de verrouillage/déverrouillage.

6. Système comprenant une porte (2) d'aéronef de type semi-plug, un encadrement de porte (3), un mécanisme d'ouverture/fermeture et un ensemble de guidage stabilisateur de porte (2) de mise en œuvre du procédé selon l'une quelconque des revendications précédentes, ladite porte (2) étant engagée dans l'encadrement de porte (3) par des butés (7, 8), l'ensemble de guidage comportant une bielle de stabilisation (6) avec une attache (6a) sur l'encadrement de porte (3) et
une extrémité (6c), **caractérisé en ce que** la bielle de stabilisation (6), localisée sur une bordure de porte (2h) s'étendant parallèlement à l'axe longitudinal de l'aéronef, est mobile en translation à une de ses extrémités (6C) par rapport à la porte dans la direction longitudinale de l'aéronef lors des phases de désengagement et de réengagement des butées (7, 8), et est verrouillée sur la porte (2) lors des phases de swivelling et de swivelling retour par un mécanisme de verrouillage à levier (15) apte à être actionné par le moyen de rappel (16) entre ses deux positions de fonctionnement et maintenu, lors des phases de désengagement et de réengagement des butées (7, 8), en liaison avec une rampe de commande (14) solidaire de l'encadrement de porte (3) et comportant les paliers de verrouillage/déverrouillage.

7. Système selon la revendication précédente, **caractérisé en ce qu'**un mécanisme (9) de verrouillage/déverrouillage est localisé sur une zone médiane (2m) en bordure (2h) du haut de la porte.

8. Système selon la revendication 7, **caractérisé en ce que** le mécanisme (9) de verrouillage/déverrouillage de la bielle de stabilisation (6) est composé d'au moins deux dispositifs, un premier dispositif (11, 15) étant solidaire de la porte (2) et un deuxième (12, 14) de l'encadrement de porte (3), le premier dispositif (11, 15) comportant un levier (15) articulé sur un axe (15C) et un support de levier (11) muni d'une glissière (6B) dans laquelle l'extrémité mobile (6C) de la bielle de stabilisation (6) peut se déplacer en translation horizontale par rapport à la porte (2), et le deuxième dispositif (12, 14) comportant la rampe de commande (14) ainsi qu'une rampe de suivi (12) du premier dispositif (11, 15) pendant les phases de désengagement/réengagement des butées (7, 8) de la porte (2), ces deux rampes (12, 14) étant accolées l'une à l'autre et positionnées dans un plan horizontal ;

9. Système selon la revendication 8, **caractérisé en ce que** le levier (15) présente une ouverture à l'une de ses extrémités (15B) qui, en position de verrouillage, est engagée sur la bielle de stabilisation (6) afin de bloquer sa translation le long de la porte (2) et qui, en position de déverrouillage, est apte à libérer la bielle de stabilisation (6) en translation le long de la porte (2) et, à son autre extrémité un doigt (15A), qui maintient, lors des phases de désengagement et de réengagement des butées (7, 8), le contact de la bielle de stabilisation (6) sur la rampe de commande (14).

10. Système selon l'une quelconque des revendications 6 à 9, **caractérisée en ce que** le moyen de rappel est un ressort de torsion (16) enroulé autour de l'axe (15C) du levier et agencé de sorte qu'il positionne le levier (15) en position de verrouillage lorsqu'il est relâché.

11. Système selon l'une quelconque des revendications 6 à 10, **caractérisé en ce que** la rampe de commande (14) est disposée et dimensionnée de sorte qu'à la fin de la phase de désengagement des butées, (7, 8) le levier (15) passe en position de verrouillage de la bielle de stabilisation (6) et que, au début de phase de réengagement des butées (7, 8), le levier passe en position de déverrouillage de la bielle de stabilisation (6).

12. Système selon l'une quelconque des revendications 6 à 11, **caractérisé en ce que** les paliers de la rampe de commande (14) sont constitués d'un premier et d'un deuxième paliers (14B, 14C), horizontaux et parallèles, agencés pour que, lorsque la porte (2) est en position fermée, le premier palier (14B) fait contact avec le doigt du levier (15A) et lorsque la porte (2) arrive en fin de phase de désengagement des butées (7, 8) ou au début de phase de réengagement des butées (7, 8), le second palier (14C) fait contact avec le doigt de levier (15A).

13. Système selon la revendication 12, **caractérisé en ce que** les deux paliers (14B, 14C) de commande sont reliés entre eux par une surface définissant une pente de transition (14A).

## Patentansprüche

1. Verfahren zum stabilisierenden Führen einer Flugzeugtür vom Typ semi-plug bei deren Öffnen/Schließen, wobei die Tür (2) in einer Flugzeugöffnung (P, P') angeordnet ist, die eine Türrahmenstruktur (3) definiert, umfassend vordere und hintere Teile, die in Bezug auf eine Längsachse (X-Achse) des Flugzeugs definiert sind, die konventionell zwischen einem Heck und einem Bug ausgerichtet ist, wobei das Flugzeug innere und äußere Räume definiert, wobei die Kinematik der Bewegungen zum Lösen der Tür (2) in Bezug auf ihren Rahmen (3) und zu ihrem vollständigen Öffnen durch kreisförmige Translation, Schwenken genannt, in einer selben horizontalen Ebene abläuft,
wobei das Verfahren, im Öffnungsmodus der Tür, die folgenden Schritte umfasst:
- eine Phase des Lösens der Anschläge (7, 8) durch eine erste Verlagerung der Tür (2) zum Heck hin und zum Innenraum des Flugzeugs hin gemäß einer Rotation und einer Translation, gefolgt von einer zweiten Verlagerung der Tür (2) durch Rotation um ihren hinteren Teil, dann eine zum Bug und Außenraum des Flugzeugs hin geneigte Translation, die zu dem Austreten der Tür (2) parallel zu ihrem Rahmen (3) zum Außenraum des Flugzeugs führt, während der sich eine Stabilisierungsstange (6) verlagert, **dadurch gekennzeichnet, dass** die Stabilisierungsstange am Türrand (2h) verortet ist und sich parallel zur Längsachse des Flugzeugs erstreckt und eines ihrer Enden (6c) in horizontaler Translation parallel zu einem horizontalen Abschnitt der Tür (2) frei beweglich ist;
- ein Verriegeln des beweglichen Endes (6c) an der Tür (2) am Ende dieser Phase des Lösens der Anschläge, wobei dieses Ende (6c) dann dazu angepasst ist, sich nicht mehr in freier Translation zu bewegen, während es an die Tür (2) angelenkt bleibt; und
- ein stabilisiertes Führen der Tür (2) durch die Stabilisierungsstange (6) parallel zur Längsachse des Flugzeugs während der Schwenkphase;
und im Schließmodus gemäß einer umgekehrten Kinematik:
- die Stabilisierungsstange (6) verriegelt gehalten wird, wobei sie das Führen der Tür (2) während einer Zurückschwenkphase stabilisiert;
- eines der Enden (6c) der Stabilisierungsstange (6) freigegeben wird und in Bezug auf die Tür (2) in horizontaler Translation frei ist; und
- eine Phase des Wiedereingreifens der Anschläge (7, 8).

2. Verfahren zum stabilisierenden Führen einer Tür nach Anspruch 1, wobei ein Rückstellmittel (16) das Verriegeln/Entriegeln der Stabilisierungsstange (6) zwischen zwei Betriebsstellungen auslöst, die der Verriegelung beziehungsweise der Entriegelung der Stabilisierungsstange (6) entsprechen.

3. Verfahren zum stabilisierenden Führen einer Tür nach Anspruch 2, wobei die Stabilisierungsstange (6) in der Verriegelungsstellung in der Translation entlang der Tür (2) blockiert ist und die Stabilisierungsstange (6) in der Entriegelungsstellung in der Translation entlang der Tür (2) freigegeben ist.

4. Verfahren zum stabilisierenden Führen einer Tür nach Anspruch 3, wobei das Rückstellmittel (16) in den Phasen des Lösens und Wiedereingreifens der Anschläge (7, 8) durch Verriegelungs-/Entriegelungslager der Stabilisierungsstange (6) betätigt wird, wobei diese Lager den beiden Betriebsstellungen des Rückstellmittels (16) entsprechen.

5. Verfahren zum stabilisierenden Führen einer Tür nach Anspruch 4, wobei das Rückstellmittel (16) in den Schwenk- und Zurückschwenkphasen nicht durch die Verriegelungs-/Entriegelungslager betätigt wird.

6. System, umfassend eine Tür (2) eines Flugzeugs vom Typ semi-plug, einen Türrahmen (3), einen Öffnungs-/Schließmechanismus und eine Anordnung zum stabilisierenden Führen einer Tür (2) zur Implementierung des Verfahrens nach einem der vorhergehenden Ansprüche, wobei die Tür (2) in den Türrahmen (3) über Anschläge (7, 8) eingesetzt wird, wobei die Führungsanordnung eine Stabilisierungsstange (6) mit einer Befestigung (6a) am Türrahmen (3) und einem Ende (6c) umfasst, **dadurch gekennzeichnet, dass** die Stabilisierungsstange (6), die an einem Türrand (2h) verortet ist, der sich parallel zur Längsachse des Flugzeugs erstreckt, an einem ihrer Enden (6C) in Bezug auf die Tür in Längsrichtung des Flugzeugs in den Phasen zum Lösen und Wiedereingreifen der Anschläge (7, 8) in Translation beweglich ist und an der Tür (2) in den Schwenk- und Zurückschwenkphasen durch einen Hebelverriegelungsmechanismus (15) verriegelt ist, der geeignet ist, durch das Rückstellmittel (16) zwischen seinen beiden Betriebsstellungen betätigt zu werden, und in den Phasen zum Lösen und Wiedereingreifen der Anschläge (7, 8) gehalten zu werden, in Verbindung mit einer Steuerrampe (14), die mit dem Türrahmen (3) fest verbunden ist und die Verriegelungs-/Entriegelungslager umfasst.

7. System nach dem vorhergehenden Anspruch, **dadurch gekennzeichnet, dass** ein Verriegelungs-/Entriegelungsmechanismus (9) in einem mittleren Bereich (2m) am oberen Rand (2h) der Tür verortet ist.

8. System nach Anspruch 7, **dadurch gekennzeichnet, dass** der Verriegelungs-/Entriegelungsmechanismus (9) der Stabilisierungsstange (6) aus mindestens zwei Vorrichtungen zusammengesetzt ist, wobei eine erste Vorrichtung (11, 15) mit der Tür (2) und eine zweite (12, 14) mit dem Türrahmen (3) fest verbunden ist, wobei die erste Vorrichtung (11, 15) einen Hebel (15) umfasst, der an eine Achse (15C) angelenkt ist, und einen Hebelhalter (11), der mit einer Laufbahn (6B) versehen ist, in der sich das bewegliche Ende (6C) der Stabilisierungsstange (6) in horizontaler Translation in Bezug auf die Tür (2) verlagern kann, und wobei die zweite Vorrichtung (12, 14) die Steuerrampe (14) umfasst sowie eine Folgerampe (12) zum Folgen der ersten Vorrichtung (11, 15) während der Phasen des Lösen/Wiedereingreifens der Anschläge (7, 8) der Tür (2), wobei diese Rampen (12, 14) aneinandergefügt sind und in einer horizontalen Ebene positioniert sind;

9. System nach Anspruch 8, **dadurch gekennzeichnet, dass** der Hebel (15) eine Öffnung an einem seiner Enden (15B) aufweist, die in der Verriegelungsstellung in die Stabilisierungsstange (6) eingreift, um ihre Translation entlang der Tür (2) zu blockieren, und die in der Entriegelungsstellung geeignet ist, die Stabilisierungsstange (6) in Translation entlang der Tür (2) freizugeben, und, an seinem anderen Ende einen Finger (15A), der in den Phasen des Lösens und Wiedereingreifens der Anschläge (7, 8) den Kontakt der Stabilisierungsstange (6) an der Steuerrampe (14) hält.

10. System nach einem der Ansprüche 6 bis 9, **dadurch gekennzeichnet, dass** das Rückstellmittel eine Torsionsfeder (16 ist, die um die Achse (15C) des Hebels gewunden ist und so angeordnet ist, dass sie den Hebel (15) in die Verriegelungsstellung positioniert, wenn sie entspannt ist.

11. System nach einem der Ansprüche 6 bis 10, **dadurch gekennzeichnet, dass** die Steuerrampe (14) so angeordnet und dimensioniert ist, dass der Hebel (15) am Ende der Phase des Lösens der Anschläge (7, 8) in die Verriegelungsstellung der Stabilisierungsstange (6) übergeht und dass der Hebel zu Beginn der Phase des Wiedereingreifens der Anschläge (7, 8) in die Entriegelungsstellung der Stabilisierungsstange (6) übergeht.

12. System nach einem der Ansprüche 6 bis 11, **dadurch gekennzeichnet, dass** die Lager der Steuerrampe (14) aus einem ersten und einem zweiten Lager (14B, 14C) bestehen, die horizontal und parallel sind und so angeordnet sind, dass, wenn die Tür (2) in der geschlossenen Stellung ist, das erste Lager (14B) Kontakt mit dem Finger des Hebels (15A) hat, und wenn die Tür (2) an das Ende der Phase des Lösens der Anschläge (7, 8) oder an den Beginn der Phase des Wiedereingreifens der Anschläge (7, 8) gelangt, das zweite Lager (14C) Kontakt mit dem Finger des Hebels (15A) hat.

13. System nach Anspruch 12, **dadurch gekennzeichnet, dass** die beiden Lager (14B, 14C) zur Steuerung untereinander durch eine Fläche verbunden sind, die eine Übergangsneigung (14A) definiert.

## Claims

1. Method for stabilizing a semi-plug type aircraft door during its opening/closing, said door (2) being arranged in an aircraft opening (P, P') defining a door frame structure (3), comprising front and rear parts, defined in relation to a longitudinal axis (X axis) of the aircraft oriented conventionally between a rear and a front, the aircraft defining interior and exterior spaces, the kinematics of the movements of disengagement of the door (2) relative to its frame (3) and of its complete opening by circular translation, known as swivelling, taking place in the same horizontal plane, the method comprising the following steps, in door opening mode:
- a phase of disengagement of the stops (7, 8) by a first movement of the door (2) rearward and inward of the aircraft according to a rotation and a translation, followed by a second movement of the door (2) by rotation about its rear part, then a forward and outward inclined translation of the door, leading to the exit of the door (2) parallel to its frame (3) outside the aircraft, during which a stabilizing connecting rod (6) moves, **characterized in that** the stabilizing connecting rod is located at the edge of the door (2h) and extending parallel to the longitudinal axis of the aircraft, and one of whose ends (6c) is freely movable in horizontal translation parallel to a horizontal section of the door (2);
- locking of said movable end (6c) on the door (2) at the end of this stop disengagement phase, this end (6c) then being adapted so that it no longer moves freely while remaining articulated on the door (2); and
- stabilized guidance of the door (2) by said stabilizing connecting rod (6) parallel to the longitudinal axis of the aircraft during the swiveling phase; and in closing mode according to reverse kinematics:
- the stabilizing connecting rod (6) is kept locked, stabilizing the guidance of the door (2) during a return swivelling phase;
- one of the ends (6c) of the stabilizing connecting rod (6) is unlocked and free to move horizontally relative to the door (2); and
- a phase of re-engagement of the stops (7, 8).

2. Door stabilizing guide method according to claim 1, in which a return means (16) triggers the locking/unlocking of the stabilizing connecting rod (6) between two operating positions corresponding respectively to the locking and unlocking of the stabilizing connecting rod (6).

3. Door stabilizing guide method according to claim 2, wherein in the locking position the stabilizing connecting rod (6) is blocked from translating along the door (2) and in the unlocking position, the stabilizing connecting rod (6) is free to translate along the door (2).

4. Method for stabilizing door guidance according to claim 3, wherein during the disengagement and reengagement phases of the stops (7, 8), the return means (16) is actuated by locking/unlocking bearings of the stabilizing connecting rod (6), these bearings corresponding to the two operating positions of the return means (16).

5. Door stabilizing guide method according to claim 4, wherein during the swiveling and reverse swiveling phases, the return means (16) is not actuated by the locking/unlocking bearings.

6. System comprising a semi-plug type aircraft door (2), a door frame (3), an opening/closing mechanism and a door stabilizing guide assembly for implementing the method according to any of the preceding claims, said door (2) being engaged in the door frame (3) by stops (7, 8), the guide assembly comprising a stabilizing connecting rod (6) with a fastener (6a) on the door frame (3) and an end (6c), **characterized in that** the stabilizing connecting rod (6), located on a door edge (2h) extending parallel to the longitudinal axis of the aircraft, is movable in translation at one of its ends (6C) relative to the door in the longitudinal direction of the aircraft during the disengagement and re-engagement phases of the stops (7, 8), and is locked to the door (2) during the swivelling and return swivelling phases by a lever locking mechanism (15) capable of being actuated by the return means (16) between its two operating positions and held, during the disengagement and re-engagement phases of the stops (7, 8), in conjunction with a control ramp (14) integral with the door frame (3) and comprising the locking/unlocking bearings.

7. System according to the previous claim, **characterized in that** a locking/unlocking mechanism (9) is located in a middle area (2m) at the edge (2h) of the top of the door.

8. System according to claim 7, **characterized in that** the locking/unlocking mechanism (9) of the stabilizing connecting rod (6) is composed of at least two devices, a first device (11, 15) being integral with the door (2) and a second device (12, 14) being integral with the door frame (3), the first device (11, 15) comprising a lever (15) articulated on an axis (15C) and a lever support (11) provided with a slide (6B) in which the movable end (6C) of the stabilizing connecting rod (6) can move horizontally relative to the door (2), and the second device (12, 14) comprising the control ramp (14) and a tracking ramp (12) for the first device (11, 15) during the disengagement/reengagement phases of the stops (7, 8) of the door (2), these two ramps (12, 14) being attached to each other and positioned in a horizontal plane;

9. System according to claim 8, **characterized in that** the lever (15) has an opening at one of its ends (15B) which, in the locked position, is engaged on the stabilizing connecting rod (6) in order to block its translation along the door (2) and which, in the unlocked position, is capable of releasing the stabilizing connecting rod (6) from translating along the door (2) and, at its other end, a finger (15A) which, during the disengagement and reengagement phases of the stops (7, 8), maintains contact between the stabilizing connecting rod (6) and the control ramp (14).

10. System according to any of claims 6 to 9, **characterized in that** the return means is a torsion spring (16) wound around the axis (15C) of the lever and arranged so that it positions the lever (15) in the locked position when released.

11. System according to any of claims 6 to 10, **characterized in that** the control ramp (14) is arranged and dimensioned such that at the end of the disengagement phase of the stops (7, 8), the lever (15) moves into the locking position of the stabilizing connecting rod (6) and that, at the beginning of the re-engagement phase of the stops (7, 8), the lever (15) moves into the unlocking position of the stabilizing connecting rod (6). (7, 8) the lever (15) moves into the locking position of the stabilizing rod (6) and that, at the beginning of the re-engagement phase of the stops (7, 8), the lever moves into the unlocking position of the stabilizing rod (6).

12. System according to any of claims 6 to 11, **characterized in that** the bearings of the control ramp (14) consist of a first and a second bearing (14B, 14C), which are horizontal and parallel, arranged so that, when the door (2) is in the closed position, the first bearing (14B) makes contact with the lever finger (15A) and when the door (2) reaches the end of the disengagement phase of the stops (7, 8) or the beginning of the re-engagement phase of the stops (7, 8), the second bearing (14C) makes contact with the lever finger (15A).

13. System according to claim 12, **characterized in that** the two control bearings (14B, 14C) are connected to each other by a surface defining a transition slope (14A).
